# EUROPEAN PATENT APPLICATION

(11) **EP 1 717 515 A1**
(43) Date of publication of application: **02.11.2006**
(21) Application number: 05009378.0
(22) Date of filing: 28.04.2005
(51) Int. Cl.: F23Q 3/00, F23Q 7/00, F23Q 7/22, H01T 13/04, F02C 7/266

(54) **Lead arrangement for a combustor unit**

(71) Applicant: SIEMENS AKTIENGESELLSCHAFT, 80333 München (DE)
(72) Inventor: Beutin, Matthias, 46446 Emmerich (DE); Braun, Gilbert, 52134 Herzogenrath (DE); Eisenlohr, Holger, 13591 Berlin (DE); Gaio, Giuseppe, 53173 Bonn (DE); Günther, Frank, 47249 Duisburg (DE); Rogos, Kai-Uwe, 45473 Mülheim an der Ruhr (DE); Vonnemann, Bernd, 45968 Gladbeck (DE); Zastrozny, Edmund, 45359 Essen (DE)

(57) **Abstract**

A lead arrangement (1), in particular a high voltage lead arrangement, for being installed in a combustor unit to connect an ignition system of the combustor unit to an external power source and to deliver an ignition voltage to the ignition system, comprises: a tube (3) having a tube wall (4) and an lumen surrounded by the tube wall, at least one lead (5) extending through the lumen of the tube, and a mineral isolator material (7) disposed between the lead (5) and the tube wall (4).

## Description

### BACKGROUND OF THE INVENTION

The present invention relates to a lead arrangement, in particular to a high voltage lead arrangement, for being installed in a combustor unit to connect an ignition system of the combustor unit to an external power source, in particular to a high voltage power source, and to deliver an ignition voltage to the ignition system. The invention further relates to a combustor unit comprising such a lead arrangement.

In particular in combustion turbines such as gas turbines, leads for delivering a high voltage need to be led to combustor units. The high voltage is needed by the ignition system in the combustor in order to start the combustion process. However, due to the combustion process taking place in a combustion chamber to which the combustor is fixed, after the ignition has been performed the temperatures near the combustor may be high during operation of the gas turbine.

The high voltage leads which are led to the combustor are connected to ignition electrodes of the ignition system by ceramic receivings for spark plugs which are arranged at the flange of the combustor. The leads are isolated by a plastic material which may be used in ambient temperatures up to about 180°C. The temperatures present near the combustors during operation of the gas turbine, however, may be higher than 180°C.

Such high temperatures could cause damages to the leads, and as a consequence could reduce the availability of the gas turbine.

To address the issue of the high temperatures present near the combustors, it was proposed to use ignition systems which are moved mechanically into the combustion chamber only when the combustion is to be ignited. After ignition the ignition systems are retracted from the combustion chamber. Although such ignition systems provide a reasonable method to address the issue of the high temperatures near the combustors during gas turbine operation they are not suitable for the use in gas turbines which comprise a large number of ignition systems as the mechanics for such retractable ignition systems is complicated.

Further, it was proposed to improve thermal isolation of the combustion chamber and to reduce hot gas leakage at the gas turbine. However, improving thermal isolation and reducing hot gas leakage is a time consuming and expenditure process.

Still further, it has been proposed to use special electrodes which are elongated compared to standard electrodes so that leads need not to be led so close towards the combustor. However, it would be preferable to use standard ignition electrodes instead of elongated electrodes.

### SUMMARY OF THE INVENTION

It is therefore an object of the present invention to provide an improved lead arrangement which can be used in close vicinity to the combustor unit. It is a further object of the present invention to provide an improved combustor unit comprising an improved lead arrangement for delivering a high-voltage to an ignition system of the combustor unit.

An inventive lead arrangement, which in particular may be a high-voltage lead arrangement for being installed in a combustor unit to connect an ignition system of the combustor unit to an external power source and in particular to a high-voltage power source and to deliver an ignition voltage to the ignition system, comprises a tube having a tube wall and a lumen surrounded by the tube wall; at least one lead extending through the lumen of the tube; and a mineral isolator a material disposed between the lead and the tube wall. By the inventive structure of a lead arrangement the lead may resist temperatures as high as 500°C. In addition, the inventive lead arrangement can bear higher mechanical loads than comparable leads comprising an isolation made by a plastic material.

The tube may, in particular, be a metal tube and can, for example, be made from steel. The ends of the tube are preferably sealed airtight and/or water tight. Such a sealing may be achieved by providing a seal at an end of the tube which comprises a sleeve fixed to the tube end. The sleeve may e.g. be hard soldered to the tube end. The sleeve may further comprise a contact feed-through such as e.g. a contact for a spark plug or a resistor. Suitable materials for such sleeves are steel and ceramics.

Suitable isolator materials are in particular ceramic materials as for example ceramic powders. An example for a suitable ceramic powder is zirconium oxide powder.

The temperature resistance of the lead arrangement may be further increased by providing a high temperature resistant hose which surrounds the tube.

At one end of the lead assembly a lead arrangement section which is isolated by a plastic material may be provided. By providing a lead arrangement section which is isolated by plastic material the lead section which is further away from the combustor and therefore further away from the high temperatures can have a higher flexibility.

The inventive lead arrangement is in particular suitable for the use with a combustor of a combustion turbine such as a gas turbine.

### BRIEF DESCRIPTION OF THE DRAWINGS

Further features and advantages of the present invention will become clear from the following description of particular embodiments of the invention with reference to the accompanying drawings.
Figure 1 shows a first embodiment of the inventive lead arrangement.
Figure 2 shows a second embodiment of the inventive lead arrangement.
Figure 3 shows a third embodiment of the inventive lead arrangement.
Figure 4 shows a sectional view of the embodiment shown in figure 3 along the line A-A.
Figure 5 shows a fourth embodiment of the inventive lead arrangement.
Figure 6 shows the lead arrangement of figure 5 as it is connected to a combustor unit of a combustion chamber in a gas turbine.

### DETAILED DESCRIPTION OF EMBODIMENTS OF THE INVENTIONS

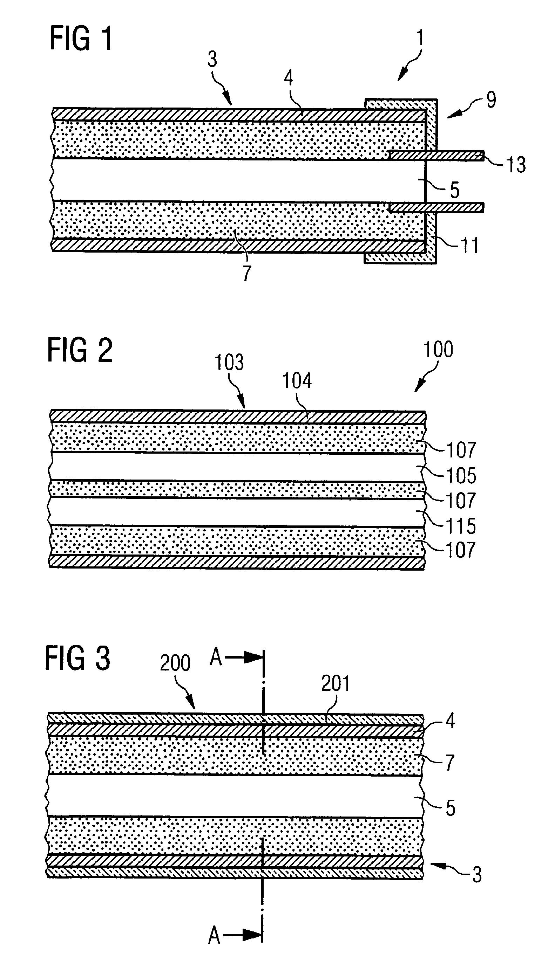

Figure 1 shows schematically a first embodiment of the inventive lead arrangement in sectional view, the section being taken in axial direction of the lead arrangement.

The lead arrangement 1 comprises a tube 3 made of high grade steel. The tube wall 4 surrounds a lumen in the centre of which an electric high voltage lead 5 is arranged which extents in axial direction through the entire tube 3.

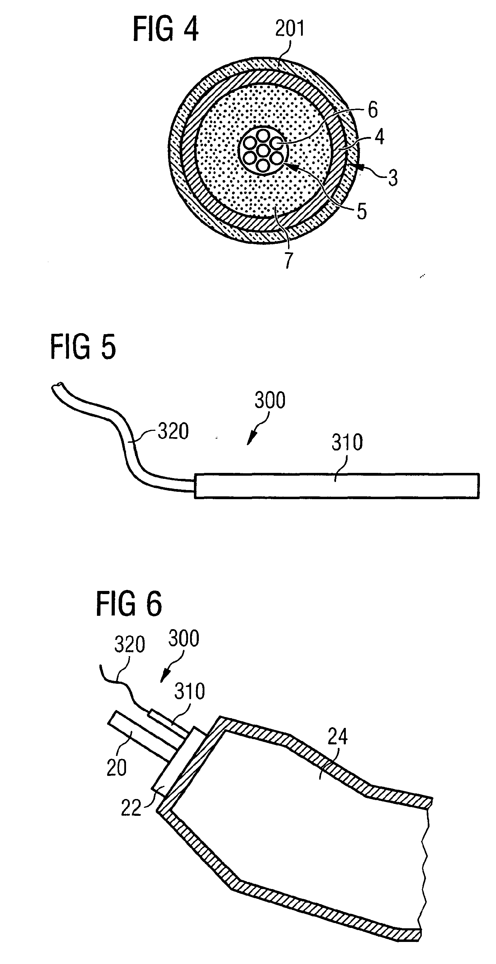

The high voltage lead is made from nickel plated copper and may comprise a number of strands 6 like it is shown in figure 4. If the lead is built up of a number strands 6 it may, for example, be built up of 30 strands 6 having a cross section of 0.25 mm. The diameter of the tube may, in this case, be 6 mm. However, the lead does not necessarily need to be built up by a number of strands but may also be made from a single strand.

Between the high voltage lead 5 and the wall 4 of the tube 3 a zirconium oxide powder 7 is disposed for electrically isolating the high voltage lead 5 to the tube 3. Instead of zirconium oxide powder other ceramic powders or other mineral isolator materials may be used as well. It should be stressed that it is not necessary for the mineral isolator to be provided in form of a powder. It may as well be provided in form of rings having a central opening through which the high voltage lead 5 extents and having an outer diameter which is chosen such that the rings fit into the tube 3. However, using a powder simplifies the filling of the tube with the isolator material.

At the end 9 of the tube 3 by which the lead arrangement is to be connected to a combustor unit a ceramic sleeve 11 is fixed by hard soldering it to the tube wall 4. The sleeve 11 seals the tube 3 airtight and water tight. In the central section of the sleeve, a metallic feed-through, e.g. made from high grade steel, is arranged which serves as a plug for connecting the lead arrangement to a receptacle in the flange of a combustor unit. In the simplest case, as it is shown in figure 1, the feed-through may be realized by a steel sleeve 13 hard soldered to the ceramic sleeve 11. However, more sophisticated feed-throughs comprising plugs for spark plugs or resistors may be used.

The other end of the tube 3 is also sealed by a ceramic sleeve which is hard soldered to the tube wall 4, so that the whole assembly is airtight and water tight.

A second embodiment of the inventive lead arrangement 100 is shown in figure 2. The second embodiment differs from the first embodiment in that two high voltage leads 105 and 115 are arranged inside a high grade steel tube 103. Both leads 105 and 115 are isolated against each other as well as against the wall 104 of the high grade steel tube 103 by a ceramic powder 107.

A third embodiment of the present invention is shown in figure 3. The third embodiment corresponds to the first embodiment. However, a hose 201 made from a high temperature resistant material surrounds the wall 4 of the tube 3. As an example for a high temperature resistant material, a high temperature resistant fibre material, e.g. a ceramic fibre material, may be used.

Figure 4 shows a sectional view of the embodiment shown in Fig. 3. The section is taken along the line A-A in figure 3. It can be seen that the lead 5 is built up from a number of strands 6.

A fourth embodiment of the inventive lead arrangement 300 is shown in figure 5. The fourth embodiment is built up by a lead arrangement section 310 as described with respect to the third embodiment shown in figure 3 and figure 4 and a further lead arrangement section 320 which is surrounded by a plastic isolator material. The lead arrangement section 320 which is surrounded by the plastic material extends from one end of lead arrangement section 310.

The fourth embodiment is shown in figure 6 as it is connected to the flange 22 of a combustor 20 which is fitted to a gas turbine combustion chamber 24. When the lead arrangement 300 is fixed to the flange 22 of the combustor 20, the lead section 320 which is surrounded by plastic material extends from the distal end of the tube 3. In other words, those parts of the lead arrangement which show the highest resistance against high temperatures are in close vicinity to the hot part of the combustor 20 and the combustion chamber 24 and those parts which show a lower resistance against high temperatures, i.e. the lead arrangement section 320 which is surrounded by the plastic isolator, is arranged further away from the flange 22 of the combustor 20 and the combustion chamber 24. The lead arrangement 300 is used to connect an ignition system of the combustor 20 to an external high voltage power source 24, i.e. a power source 24 which is not part of the combustor 20.

## Claims

1. A lead arrangement, in particular a high voltage lead arrangement, for being installed in a combustor unit to connect an ignition system of the combustor unit to an external power source and to deliver an ignition voltage to the ignition system, wherein the lead arrangement comprises:
- a tube having a tube wall and an lumen surrounded by the tube wall;
- at least one lead extending through the lumen of the tube; and
- a mineral isolator material disposed between the lead and the tube wall.

2. The lead arrangement as claimed in claim 1, wherein the tube is a metal tube.

3. The lead arrangement as claimed in claim 2, wherein the tube is made from steel.

4. The lead arrangement as claimed in claim 1, wherein the ends of the tube are sealed airtight and/or water tight.

5. The lead arrangement as claimed in claim 4, wherein a seal is provided at an end of the tube, the seal comprising a sleeve fixed to the end of the tube.

6. The lead arrangement as claimed in claim 5 wherein the sleeve is hard soldered to the end of the tube.

7. The lead arrangement as claimed in claim 6, wherein the sleeve comprises a contact feed-through.

8. The lead arrangement as claimed in claim 5, wherein the sleeve is a ceramic sleeve.

9. The lead arrangement as claimed in claim 1, wherein the tube is surrounded by a high temperature resistant hose.

10. The lead arrangement as claimed in claim 1, wherein the mineral isolator material is a ceramic material.

11. The lead arrangement as claimed in claim 10, wherein the ceramic material is a ceramic powder.

12. The lead arrangement as claimed in claim 11, wherein the ceramic material is zirconium oxide.

13. The lead arrangement as claimed in claim 1, wherein the a lead arrangement comprises a lead arrangement section isolated by an isolator made from a plastic material.

14. A combustor unit in a combustion turbine, the combustor unit comprising an ignition system and a lead arrangement, in particular a high voltage lead arrangement, connecting the ignition system to an external power source for delivering an ignition voltage, wherein the lead arrangement comprises:
- a tube having a tube wall and a lumen surrounded by the tube wall;
- at least one lead extending through the lumen of the tube; and
- a mineral isolator material disposed between the lead and the tube wall.

15. The combustor unit as claimed in claim 14, wherein the tube is a metal tube.

16. The combustor unit as claimed in claim 15, wherein the tube is made from steel.

17. The combustor unit as claimed in claim 14, wherein the ends of the tube are sealed airtight and/or water tight.

18. The combustor unit as claimed in claim 17, wherein a seal is provided at an end of the tube, the seal comprising a sleeve fixed to the end of the tube.

19. The combustor unit as claimed in claim 18 wherein the sleeve is hard soldered to the end of the tube.

20. The combustor unit as claimed in claim 19, wherein the sleeve comprises a contact feed-through.

21. The combustor unit as claimed in claim 18, wherein the sleeve is a ceramic sleeve.

22. The combustor unit as claimed in claim 14, wherein the tube is surrounded by a high temperature resistant hose.

23. The combustor unit as claimed in claim 14, wherein the mineral isolator material is a ceramic material.

24. The combustor unit as claimed in claim 23, wherein the ceramic material is a ceramic powder.

25. The combustor unit as claimed in claim 24, wherein the ceramic material is zirconium oxide.

26. The combustor unit as claimed in claim 14, wherein the a lead arrangement comprises a lead arrangement section isolated by an isolator made from a plastic material.
